# EUROPEAN PATENT SPECIFICATION

(11) **EP 0 578 852 B1**
(45) Date of publication and mention of the grant of the patent: **07.10.1998**
(21) Application number: 92112078.8
(22) Date of filing: 15.07.1992
(51) Int. Cl.: E03F 5/02, C02F 1/52, B29C 53/78

(54) **A sewage well or a small sewage purification plant**
Abwasserschacht oder kleine Abwasserreinigungsanlage
Regard des eaux usées ou petite station de purification des eaux usées

(43) Date of publication of application: 19.01.1994
(73) Proprietor: Skandinavisk Ecotech AB, SEAB, 957 32 Övertornea (SE)
(72) Inventor: Saarenketo, Tapio, SF-96400 Rovaniemi (FI)
(74) Representative: Fiener, Josef

(56) References cited:
- DE-A- 2 308 418
- DE-A- 2 331 242
- US-A- 3 720 556
- US-A- 3 933 642

## Description

The invention concerns a sewage well or a small sewage purification plant.

The most common way of treating sewage or waste waters in sparsely-populated areas is to lead them via three separation wells into the ground. The heavy particles or substances in the wells settle and the lighter ones rise to the surface. The water from one well to another is led via a socket pipe, which takes the fluid from between these layers. The sewage wells are traditionally made of concrete rings. Also ready-made plastic wells are nowadays available. As an alternative for separation wells may be mentioned small purification plants, which are suited e.g. to a sewage solution of a row house or a small house group. In this case, the maintenance and supervision do not remain to be paid by a single dweller.

US-A-3,933,642 discloses a tubular flocculation apparatus with a helical tube. The coiled pipe is disposed within a holding tank and decreases stepwise in diameter. As the coil of the flocculation tube is surrounded by such a separate cylindrical holding tank the structure thereof has to be rather heavy. Thus, manufacturing of such a flocculation apparatus is rather expensive.

DE-A-2 308 418 discloses a large diameter tube constructed for a hollow tube to be arranged in a helical way. However, this document does not form a container for treating liquids, since it merely refers to the manufacturing process of such a coiled tube.

The purpose of the invention is to provide an economical, easily mountable solution exactly utilizing the structural material for the treatment of waste waters. For achieving this purpose the inventive sewage well or small purification plant comprises the features of claim 1. The wall of the well or the purification tank is at least partially, preferably mainly, made of a hollow tube. In this connection, the hollow tube mainly refers to a tube, whose inner diameter is relatively large in comparison with the wall thickness and which by cross-section is preferably square or rectangular. A circular, oval or even hexagonal tube may naturally be used, but the structure does then necessarily not become as rigid. A fairly rigid, thermally weldable plastic may be most suitably used as the tube material. A suitable hollow tube is nowadays available under several trade names.

The erection of the wall of a well or of a purification plant may naturally occur in several ways, but it is most simple to bend the tube helically and to weld or glue it simultaneously as an extension for a preprepared wall structure. This forms in a continuous manner a tubular well wall, which may then be cut into suitable lengths and provided with bottom and cover portions as well as with other possible flanges or fixtures.

A sewage well made of a hollow tube is by construction light, but it effectively resists load on ground. The air inside the tube acts as thermal insulation. By means of programmable welding machines, well walls of different sizes and when so needed also of many forms may be easily prepared. Advantages increase, if a chemical treatment for waste water is added to such a well, whereby a small purification is concerned. In this case, the hollow tube or at least part of it may act as a container for the substance to be treated, which container is easy to fill from outside.

The purpose of the chemical treatment is generally to flocculate the waste water, i.e. to modify the substances dissolved into a flocculent form, in which they may be separated. The flocculation is considerably advanced by the fact that the waste water is moving and mixes well. This may now be realized by pumping the water in connection with the addition of the treatment agent or thereafter to the hollow tube, in which the circular flow arising is well adapted for the purpose.

The inventive small purification plant may readily also be provided with a biological purification unit, e.g. an endless biomat partially circulating in air and partially in water. In this case, it is preferable to make the purification plant by a horizontal cross-section longitudinal and to separate the biounit e.g. by means of a transversal wall, which on its part supports the structure. Spaces for the primary and/or secondary settling tanks may further be separated by means of an additional wall or walls, whereby a compact and efficient purification plant solution may be achieved. It is apparent that the hollow tube may be used as an air inlet and outlet channel needed by the biological treatment. If the tube is intended for several purposes, it is preferable to design it to be comprised of several parts, or it is also possible to use two or more overlapping or adjacent tubes.

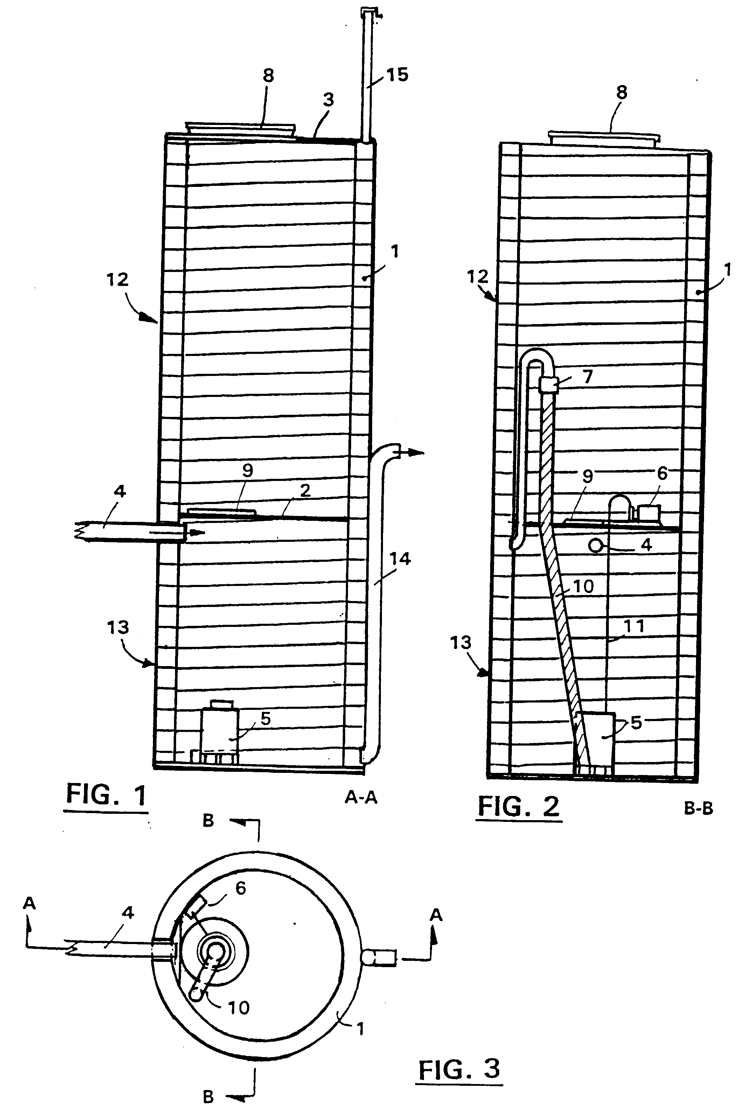

The invention is illustrated in the next example with reference to the accompanying drawings, in which Fig. 1 and 2 show a small purification plant as elevation views and Fig. 3 the same seen from above.

As shown in the figures, the vertical wall of the purification plant is comprised of a helical hollow tube 1. The structure also comprises an intermediate flange 2, a cover 3 and naturally a bottom plate. The flange 2 divides the purification plant into an upper maintenance space and a lower sewage tank. The flange 2 and the cover 3 are provided with maintenance hatches 8 and 9. An inlet tube 4 for the sewage opens directly under the intermediate flange 2. Its lead-in disconnects the hollow tube 1 and divides it suitably into an upper portion acting as a storage 12 for a chemical treatment agent and into a lower portion acting as a flocculation tube 13. A sewage pump 5 is positioned on the bottom of the purification plant. It pumps the sewage via a hose 10 and a back-pressure valve 7 into the upper portion of the flocculation tube 13. After circulating in the flocculation tube 13, the sewage is led into an outlet pipe 14.

A feeding and batching pump 6 for the treatment agent is located on top of the flange 2. It is connected to the lower portion of the storage 12, from which it feeds the treatment chemical via a hose 11 to the pump 5, in which the chemical mixes with the sewage. The chemical storage is filled from a pipe 15 leading to the helically-wound hollow tube 1 at the top. Certain characteristic features of the invention are next described by way of summary.

The wall of a sewage well or the wall of a purification tank of a purification plant is at least partially made on a hollow tube or tubes 1. When applying a chemical sewage purification, the hollow tube or tubes act at least partially as a storage 12 for a chemical treatment agent. The upper portion 12 of the hollow tube or tubes 1 preferably act as a storage for the chemical treatment agent, and a treatment-agent feeding pump 6 is placed in a space bounded by this portion 12. The phosphorus in a dissolved state located in a well or a purification plant is precipitated by means of a tube flocculation method, whereby the hollow tube or tubes 1 at least partially act as a flocculation tube or tubes 13. The lower portion 13 of the hollow tube or tubes 1 advantageously acts as a flocculation tube, which is connected to a sewage pump 5, which is positioned in a space acting as a sewage tank and limited by said lower portion 13. The well or the purification plant may also contain a biological purification unit, e.g. an endless belt circulating partly in water and partly in air. The hollow tube or tubes are designed to operate as an inlet and/or outlet channel needed by the biological unit, a so-called biomat, which is formed by a conveyor belt or end-less less mat, which has microorganism on it. By means of such a purification unit, existingseptictanks may be modified into chemical purification plants, since it may be raised or lowered as a package adjacent to the wells and connected e.g. in said three-well system between the second and third well. In addition, it may naturally be used as a pumping and flocculation unit for new and renewable plants.

## Claims

1. A sewage well or a small sewage purification plant, **characterized** in that the wall of the well or the purification tank is at least partially made of a hollow tube or tubes (1) which act at least in in part as a flocculation tube or tubes (13), whereby phosphorus in a dissolved state in the well or the purification plant is precipitated by means of a tube flocculation method. and the lower portion of which is connected to an immersed pump (5), which is positioned in the bottom of the well being connected to the upper end of the flocculation tube or tubes (13).

2. A well or a purification plant according to Claim 1, **characterized** in that the hollow tube or tubes act at least in part as a storage (12) for a chemical treatment agent when applying chemical purification of sewage in a well or a purification plant.

3. A well or a purification plant according to Claim 1 or 2, **characterized** in that the hollow tube or tubes (1) goes in the wall, which is circular or oval in cross-section, in a helical manner.

4. A well or a purification plant according to any of the preceding Claims 1-3, **characterized** in that as a storage for a chemical treatment agent acts an upper portion (12) of the hollow tube or tubes (1) and that a feeding pump (6) for the treatment agent is placed in a space limited by this upper section (12).

5. A well or a purification plant according to any of the preceding Claims 1-4, **characterized** in that as a flocculation tube or tubes acts a lower portion (13) of the hollow tube or tubes (1).

6. A well or a purification plant according to any of the preceding Claims 1-5, **characterized** in that it contains a biological purification unit, e.g. an endless biomat circulating partially in water and partially in air.

7. A well or a purification plant according to Claim 6, **characterized** in that part of the hollow tube or tubes is designed to operate as an air inlet and/or outlet channel needed by the biological unit.

8. A well or a purification plant according to any of claims 1 to 7, **characterized** in that the cross-section of the hollow tube(-s) (1) is/are square or rectangular.

9. A well or a purification plant according to any of claims 1 to 8, **characterlzed** in that the tube(-s) (1) is/are fabricated of thermally weldable plastic.

## Patentansprüche

1. Abwasserschacht oder -kleinkläranlage,
dadurch gekennzeichnet, daß
die Wandung des Schachtes oder des Klärbeckens wenigstens teilweise aus Hohlprofil oder -profilen (1) besteht, die zumindest teilweise als Flockungsrohr oder -rohre (13) fungieren, wobei im Schacht oder in der Kläranlage in gelöster Form vorliegender Phosphor nach dem Rohrflockungsverfahren ausgeflockt wird, und das Schachtunterteil an eine Tauchpumpe (5) angeschlossen ist, die am Schachtboden angeordnet und mit dem oberen Ende des Flockungsrohres (13) verbunden ist.

2. Schacht oder Kläranlage nach Anspruch 1,
dadurch gekennzeichnet, daß
bei Anwendung chemischer Abwasserreinigung in dem Schacht oder der Kläranlage das Hohlprofil bzw. die Hohlprofile zumindest teilweise als Vorratsbehälter (12) für ein chemisches Behandlungsmittel dienen.

3. Schacht oder Kläranlage nach Anspruch 1 oder 2,
dadurch gekennzeichnet, daß
das Hohlprofil bzw. die Hohlprofile (1) spiralig in einer Wandung von rundem oder ovalem Querschnitt verlaufen.

4. Schacht oder Kläranlage nach einem der Ansprüche 1 bis 3,
dadurch gekennzeichnet, daß
das Oberteil (12) des Hohlprofils bzw. der Hohlprofile (1) als Vorratsbehälter für ein chemisches Behandlungsmittel dient und in dem von diesem Oberteil (12) umgrenzten Raum die Behandlungsmittel-Speisepumpe (6) angeordnet ist.

5. Schacht oder Kläranlage nach einem der Ansprüche 1 bis 4,
dadurch gekennzeichnet, daß
als Flockungsrohr oder -rohre das Unterteil (13) des Hohlprofils bzw. der Hohlprofile (1) dient.

6. Schacht oder Kläranlage nach einem der Ansprüche 1 bis 5,
dadurch gekennzeichnet, daß
eine biologische Kläreinheit, zum Beispiel eine teils im Wasser und teils in der Luft umlaufende endlose biologische Matte, dazu gehört.

7. Schacht oder Kläranlage nach Anspruch 6,
dadurch gekennzeichnet, daß
ein Teil des Hohlprofils bzw. der Hohlprofile dazu eingerichtet ist, als Zu- und/oder Ableitungskanal für die von der biologischen Kläreinheit benötigte Luft zu fungieren.

8. Schacht oder Kläranlage nach einem der Ansprüche 1 bis 7,
dadurch gekennzeichnet, daß
das Hohlprofil bzw. die Hohlprofile im Querschnitt Quadrat- oder Rechteckform haben.

9. Schacht oder Kläranlage nach einem der Ansprüche 1 bis 8,
dadurch gekennzeichnet, daß
das Hohlprofil bzw. die Hohlprofile (1) aus thermisch schweißbarem Kunststoff gefertigt sind.

## Revendications

1. Fosse pour eaux usées ou mini-station d'épuration d'eaux usées caractérisée par le fait que la cloison de la fosse ou du bassin d'épuration est constituée au moins en partie d'un tube ou de tubes creux (1), qui servent au moins partiellement comme tube(s) de floculation (13), dans le(s)quel(s) de phosphore dissous dans le liquide contenu dans la fosse ou le bassin d'épuration est recueilli par floculation tubulaire, la partie inférieure de la fosse ou du bassin étant reliée à une pompe (5) située sur le fond de la fosse et qui est reliée à l'extrémité supérieure du tube de floculation (13).

2. Fosse pour eaux usées ou mini-station d'épuration d'eaux usées conforme à la revendication 1, caractérisée par le fait que le ou les tubes creux servent au moins en partie de réservoir (12) de produit chimique de traitement dans le cas où il est procédé à un traitement chimique des eaux usées.

3. Fosse pour eaux usées ou mini-station d'épuration d'eaux usées conforme aux revendications 1 ou 2, caractérisée par le fait que le ou les tubes creux (1) forment une paroi dont la section transversale est ronde ou ovale et en spirale.

4. Fosse pour eaux usées ou mini-station d'épuration d'eaux usées conforme à une des revendications 1 à 3, caractérisée par le fait que le réservoir de produit chimique de traitement est constitué par la partie supérieure (12) du ou des tubes creux (1) et que dans l'enceinte (12) délimitée par cette partie supérieure est installée une pompe d'alimentation du produit de traitement.

5. Fosse pour eaux usées ou mini-station d'épuration d'eaux usées conforme à une des revendications 1 à 4, caractérisée par le fait que le tube de floculation est constitué par la partie inférieure (13) du ou des tubes creux (1).

6. Fosse pour eaux usées ou mini-station d'épuration d'eaux usées conforme à une des revendications 1 à 5, caractérisée par le fait qu'elle comprend une unité de traitement biologique, par exemple un biotapis sans fin tournant partiellement dans l'air et partiellement dans l'eau.

7. Fosse pour eaux usées ou mini-station d'épuration d'eaux usées conforme à la revendication 6, caractérisée par le fait qu'une partie du ou des tubes creux est prévue comme devant servir de conduit d'alimentation et d'évacuation de l'air nécessaire à l'unité de traitement biologique.

8. Fosse pour eaux usées ou mini-station d'épuration d'eaux usées conforme à une des revendications 1 à 7, caractérisée par le fait que le ou les tubes creux sont de section carrée ou rectangulaire.

9. Fosse pour eaux usées ou mini-station d'épuration d'eaux usées conforme à une des revendications 1 à 8, caractérisée par le fait que le ou les tubes (1) sont fabriqués en plastique thermosoudable.
